# EUROPEAN PATENT APPLICATION

(11) **EP 2 669 831 A2**
(43) Date of publication of application: **04.12.2013**
(21) Application number: 12198270.6
(22) Date of filing: 19.12.2012
(51) Int. Cl.: G06F 21/10

(54) **Electronic device having conversion module to convert between content protection schemes**

(30) Priority: 31.05.2012 JP 2012125132
(71) Applicant: Kabushiki Kaisha Toshiba, Minato-ku Tokyo 105-8001 (JP)
(72) Inventor: Watanabe, Keiko, Tokyo, 105-8001 (JP); Sato, Jun, Tokyo, 105-8001 (JP)
(74) Representative: Henkel, Breuer & Partner

(57) **Abstract**

According to one embodiment, an electronic device which supports a first contents protection scheme and a second contents protection scheme, the electronic device communicating with an external device which does not support the first contents protection scheme and supports the second contents protection scheme, the electronic device characterized by including, an acquiring module (3, 7) configured to acquire, via the external device, contents which are held in a contents holding medium and which are protected by the first contents protection scheme, and an output module (3, 7) configured to convert the acquired contents protected by the first contents protection scheme to the second contents protection scheme and then outputs the contents to the external device by the second contents protection scheme.

## Description

Embodiments described herein relate generally to an electronic device which processes protected contents.

In an electronic device, commercial copyrighted contents (information) need to be protected by using a contents protection scheme permitted by a contents provider, that is, a digital rights management (DRM) scheme.

Therefore, the electronic device can use contents protected by a contents protection format if this electronic device supports the contents protection format.

However, there are (non-supporting) electronic devices that do not support a particular contents protection format.

An object of the invention is to provide an electronic device capable of suitably processing contents protected by a particular contents protection format that is not supported by an external device.

In general, according to one embodiment, an electronic device characterized by comprising: an electronic device which supports a first contents protection scheme and a second contents protection scheme, the electronic device communicating with an external device which does not support the first contents protection scheme and supports the second contents protection scheme, the electronic device comprising: an acquiring module configured to acquire, via the external device, contents which are held in a contents holding medium and which are protected by the first contents protection scheme; and an output module configured to convert the acquired contents protected by the first contents protection scheme to the second contents protection scheme and then outputs the contents to the external device by the second contents protection scheme.

A general architecture that implements the various features of the embodiments will now be described with reference to the drawings. The drawings and the associated descriptions are provided to illustrate the embodiments and not to limit the scope of the invention.
FIG. 1 is an exemplary diagram showing an example of the connection of the devices, according to an embodiment;
FIG. 2 is an exemplary diagram showing an example of a command conversion between the devices, according to an embodiment;
FIG. 3 is an exemplary diagram showing an example of the transfer of data between the devices, according to an embodiment;
FIG. 4 is an exemplary diagram showing an example of the transfer of data between the devices, according to an embodiment;
FIG. 5 is an exemplary diagram showing an example of the transfer of data between the devices, according to an embodiment;
FIG. 6 is an exemplary diagram showing an example of the transfer of data between the devices, according to an embodiment;
FIG. 7 is an exemplary diagram showing an example of the connection of the devices, according to an embodiment;
FIG. 8 is an exemplary diagram showing an example of a command used between the devices, according to an embodiment;
FIG. 9 is an exemplary diagram showing an example of a command used between the devices, according to an embodiment;
FIG. 10 is an exemplary diagram showing an example of the transfer of data between the devices, according to an embodiment;
FIG. 11 is an exemplary diagram showing an example of the transfer of data between the devices, according to an embodiment;
FIG. 12 is an exemplary diagram showing an example of the transfer of data between the device which supports the contents protection format and the non-supporting electronic device, according to an embodiment;
FIG. 13 is an exemplary diagram showing an example of the connection of the devices, according to an embodiment; and
FIG. 14 is an exemplary diagram showing an example of a command conversion between the devices, according to an embodiment.

Embodiments will now be described hereinafter in detail with reference to the accompanying drawings.

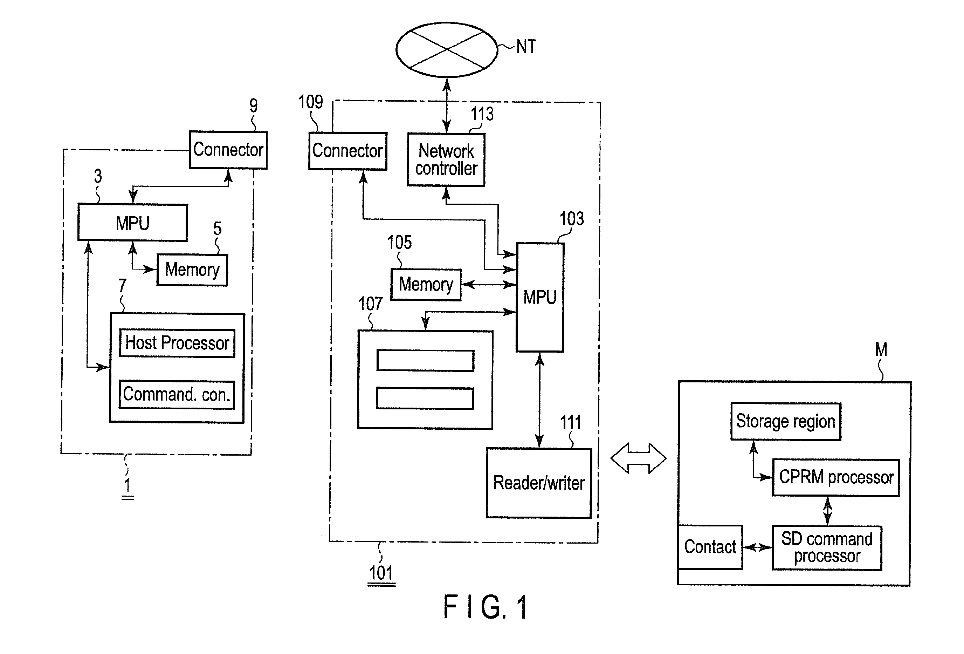

FIG. 1 shows an example of an electronic device and a storage device. The electronic device is connected to a device (hardware key device) which supports a contents protection. Although a personal computer (PC) is described as an example of the electronic device in the embodiment, the electronic device can have any shape and size, the electronic device can be portable (mobile) or non-portable (immobile), and the electronic device can be driven by any method as long as the electronic device can record (store) or use(play) contents. Any method can be used to acquire or output contents. For example, it is possible to use space waves (electric waves), cables (including optical fibers), a network such as an Internet protocol (IP) communication network, or a medium such as a semiconductor memory. Contents are also referred to as streams, programs, or information, and include, for example, images and sound or music. The images include moving images and still images, or text (information represented by characters and symbols indicated by coded code strings), and any combination of the above.

In FIG. 1, a contents protector 1 which supports the contents protection is, for example, an electronic device to be connected to a PC 101. The contents protector 1 comprises a main processing unit (MPU, main control block) 3, a memory unit 5, and a digital rights management (DRM, copyright protection technique) processing unit 7. The contents protector 1 is also generally called a dongle. The dongle 1 also comprises a connector 9 compliant with, for example, a universal serial bus (USB) standard, and is connected to the PC 101 via the connector 9.

In the dongle 1, the DRM processing unit 7 supports a first DRM scheme and a second DRM scheme, and is capable of converting contents protected by the first DRM scheme to the second DRM scheme or converting contents protected by the second DRM scheme to the first DRM. The DRMs supported by the dongle 1 are, for example, content protection for recordable media (CPRM) as the first DRM, and digital transmission content protection (DTCP) as the second DRM. That is, both the first DRM scheme and the second DRM scheme may be standardized methods. Thus, the contents protected by the first DRM scheme can be decrypted in other devices (e.g., electronic devices other than the dongle 1 and the PC 101) which support the first DRM scheme. The contents protected by the second DRM scheme can be decrypted in other devices (e.g., electronic devices other than the dongle 1 and the PC 101) which support the second DRM scheme. The DRM processing unit 7 may be incorporated in the MPU 3, or may be prepared as firmware of the MPU 3. The first DRM may be, for example, a DRM standardized by next generation secure memory initiative (NSM).

The dongle 1 supports the DTCP (second DRM), but enables CPRM-protected contents to be reproduced in the above-mentioned PC 101 which is an electronic device that does not support the CPRM (first DRM).

More specifically, in the dongle 1, the DRM processing unit 7 decrypts read CPRM contents, and then re-encrypts the CPRM contents into the DTCP (second DRM) that can be decrypted by the PC 101, and supplies the DTCP protected contents (to the PC 101).

The PC 101 comprises an MPU (main control block) 103, a memory unit 105, a DRM processing unit 107, and a connector 109 compliant with the USB standard. The PC 101 is connected to any connectable device such as the dongle 1 through the connector 109. The DRM processing unit 107 may be incorporated in the MPU 3, or may be prepared as a firmware of the MPU 103.

The PC 101 also includes a reader/writer 111, and reads contents from an SD card M removably connected to the reader/writer 111 or records (stores) contents in the SD card M.

The PC 101 further includes a network controller 113. The PC 101 is connected to a network NT which is, for example, an Internet network, and is capable of acquiring (downloading) contents from a contents provider (connection partner) to which the PC 101 is connected via the network NT.

The SD card M comprises at least an SD command processor which sends/receives an SD command to/from the reader/writer 111, a storage region (including control information region) which holds contents, and a CPRM processor which controls access to an area protected by the CPRM.

In the configuration shown in FIG. 1, in reproducing contents, the dongle 1 uses the PC 101 as an intermediary device to perform CPRM authentication directly with a CPRM-compatible medium (the SD card attached to the reader/writer 111 of the PC 101) M. Thus, the dongle 1 acquires data (e.g., a key) for the area protected by the CPRM, and decrypts the CPRM contents.

The dongle 1 re-encrypts the contents by using another DRM such as the DTCP, and passes the encrypted contents to the PC 101.

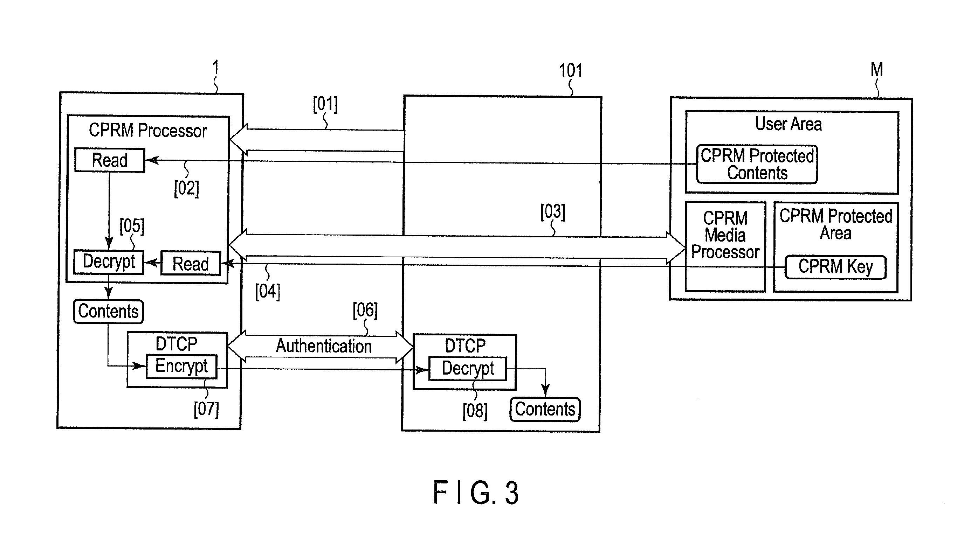

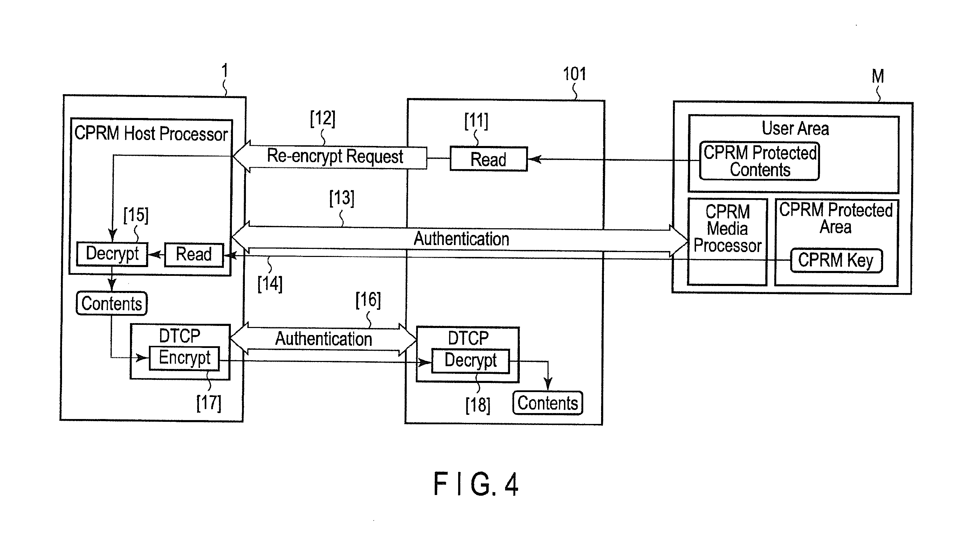

The encrypted contents (file) held in the SD card M can be read by the following methods. One method uses the file system (read program) of the dongle 1 to read the contents from the SD card M through the PC 101 as shown in FIG. 3. The other method uses the file system of the PC 101 to read the contents from the SD card M by the PC 101 as shown in FIG. 4.

In the method shown in FIG. 3, the PC 101 passes the CPRM-protected encrypted contents held in the SD card M to the dongle 1 as it is.

On the other hand, the method shown in FIG. 4 uses the file system (read program) of the PC 101 to read the CPRM-protected contents held in the SD card M. Therefore, the dongle 1 does not need to be equipped with a file system.

The reproduction method shown in FIG. 3 or FIG. 4 is capable of not only reproducing contents in the SD card M externally attached to the PC 101 (connected to the reader/writer 111) but also reproducing contents in a hard disk drive (HDD, a high-capacity storage device) or a solid state drive attached to or incorporated in the PC 101.

More specifically, according to the method shown in FIG. 3, the PC 101 makes a re-encrypt request (by the second DRM) to the dongle 1 to enable contents to be reproduced by the PC 101 [01].

The dongle 1 reads a file associated with the contents protected by the CPRM (first DRM) from the SD card M by way of the PC 101 [02].

The dongle 1 performs CPRM authentication directly with the SD card M via the PC 101 (the PC 101 only passes the command through) [03], accesses the protected area in the SD card M, and acquires key information and others [04].

Subsequently, the dongle 1 uses the acquired key information to decrypt the CPRM-protected contents acquired from the SD card M [05].

The dongle 1 decrypts the contents protected by the CPRM (first DRM), then performs DTCP (second DRM) authentication with the PC 101 [06], decrypts the contents protected by the CPRM (first DRM), re-encrypts the decrypted contents by the DTCP, and sends the re-encrypted contents to the PC 101 [07].

Subsequently, the PC 101 decrypts and reproduces the DTCP-protected contents sent from the dongle 1 [08].

More specifically, according to the method shown in FIG. 4, the PC 101 reads contents protected by the CPRM (first DRM) and an associated file from the SD card M [11], passes the CPRM-protected contents and the associated file to the dongle 1, and requests re-encryption (by the second DRM) that enables the contents to be reproduced by the PC 101 [12].

The dongle 1 (which has received the re-encrypt request) performs CPRM authentication directly with the SD card M by way of the PC 101 (the PC 101 only passes the command through) [13].

The dongle 1 accesses the CPRM-protected area in the SD card M, acquires key information and others [14], and uses the acquired key information and others to decrypt the contents protected by the protected (first DRM) [15].

The dongle 1 then performs DTCP (second DRM) authentication with the PC 101 [16], re-encrypts, by the DTCP, the contents decrypted regarding the first DRM, and sends the re-encrypted contents to the PC 101 [17].

Subsequently, the PC 101 decrypts and reproduces the DTCP contents sent from the dongle 1 [18].

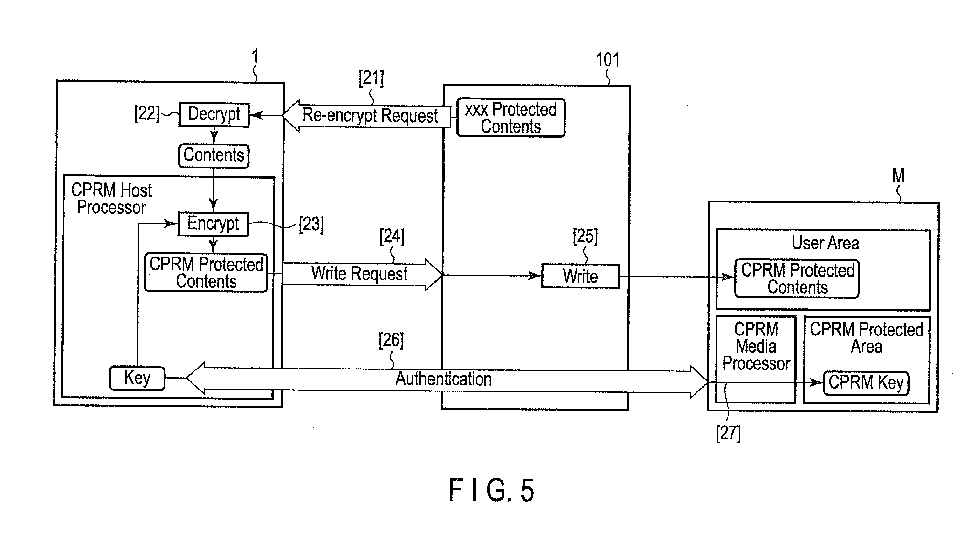

In the configuration shown in FIG. 1, to record/store contents, as shown in FIG. 5, the file name of contents to be recorded/stored in the SD card M is indicated to the dongle 1 from the PC 101, and a re-encrypt request is made to enable the contents to be recorded/stored in the SD card M by the first DRM (CPRM). The contents to be recorded area, for example, contents which are held in the PC 101 and which are to be DTCP (second DRM)-protected (by the PC 101) when sent to the dongle 1, contents which are downloaded by the PC 101 and which are previously protected by a third DRM, or contents directly received by the dongle 1 [21].

The dongle 1 decrypts the DTCP (second DRM)-protected contents sent from the PC 101 [22], and re-encrypts the contents to a format protected by the CPRM (first DRM) to record the contents in the SD card [23].

The dongle 1 instructs the PC 101 to write the re-encrypted contents in the SD card M [24].

In accordance with the instruction, the PC 101 writes the encrypted contents (and the associated file) from the dongle 1 into the SD card M [25].

The dongle 1 performs CPRM authentication directly with the SD card M via the PC 101 [26], and writes key information and others into the CPRM-protected area of the SD card M [27].

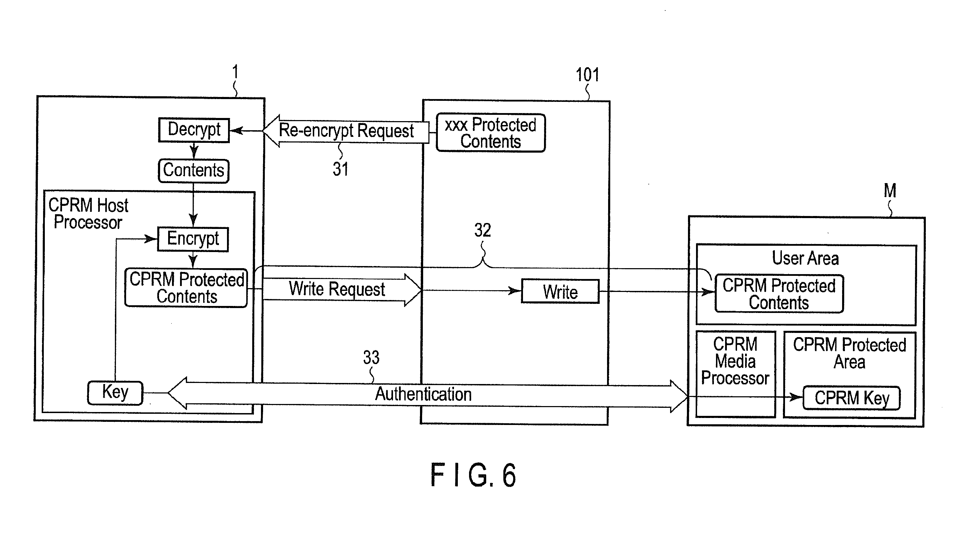

As shown in FIG. 6, the PC 101 indicates the file name of the contents held in the dongle 1 which are to be recorded/stored in the SD card M, and makes a re-encrypt request to enable contents to be recorded/stored in the SD card M by the first DRM (CPRM) [31].

The dongle 1 uses the PC 101 as an intermediary device to record/store, in the SD card M, the contents encrypted by the CPRM (first DRM) [32]. The dongle 1 performs CPRM authentication directly with the SD card M, and writes key information and others into the CPRM-protected area in the SD card M [33].

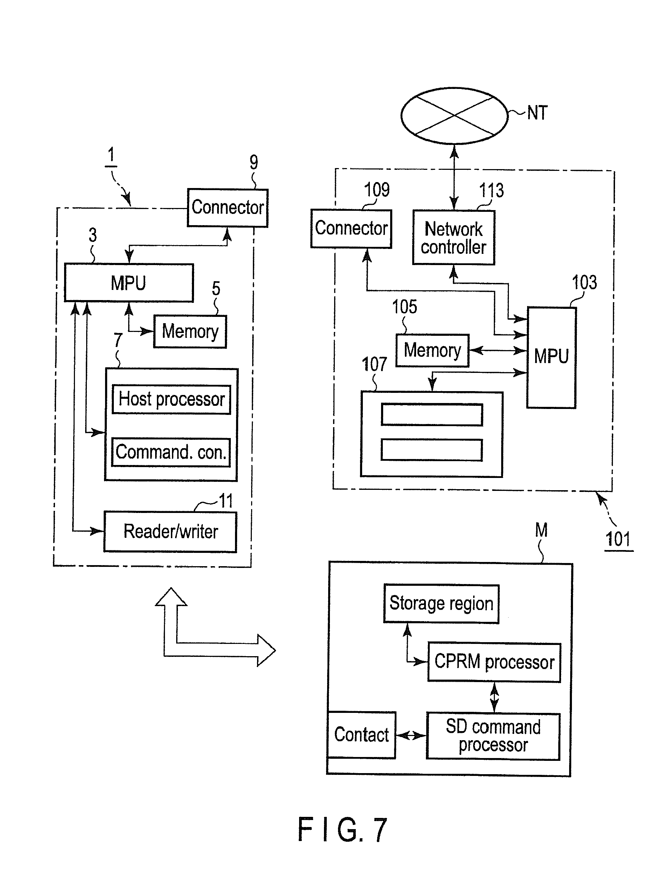

FIG. 7 shows another example of the connection of an electronic device and a storage device connected to the electronic device. The electronic device is connected to a device (hardware key device) which supports a contents protection format. In the embodiment, parts of the configuration and operation similar to the configuration and operation described with reference to FIG. 1 to FIG. 6 are not described.

In FIG. 7, a device (dongle) 1 which supports the contents protection format is, for example, an electronic device to be connected to a PC 101, and comprises an MPU 3, a memory unit 5, and a DRM processing unit 7.

The dongle 1 comprises a connector 9 compliant with, for example, the USB standard, and is connected to the PC 101 via the connector 9.

The PC 101 also includes a reader/writer 11. The PC 101 reads contents from an SD card M connected to the reader/writer 11, or records (stores) contents in the SD card M.

The DRM processing unit 7 of the dongle 1 is compatible with the first DRM and the second DRM.

The PC 101 comprises an MPU 103, a memory unit 105, a DRM processing unit 107, and a connector 109. The PC 101 is connected to, for example, the dongle 1 through the connector 109.

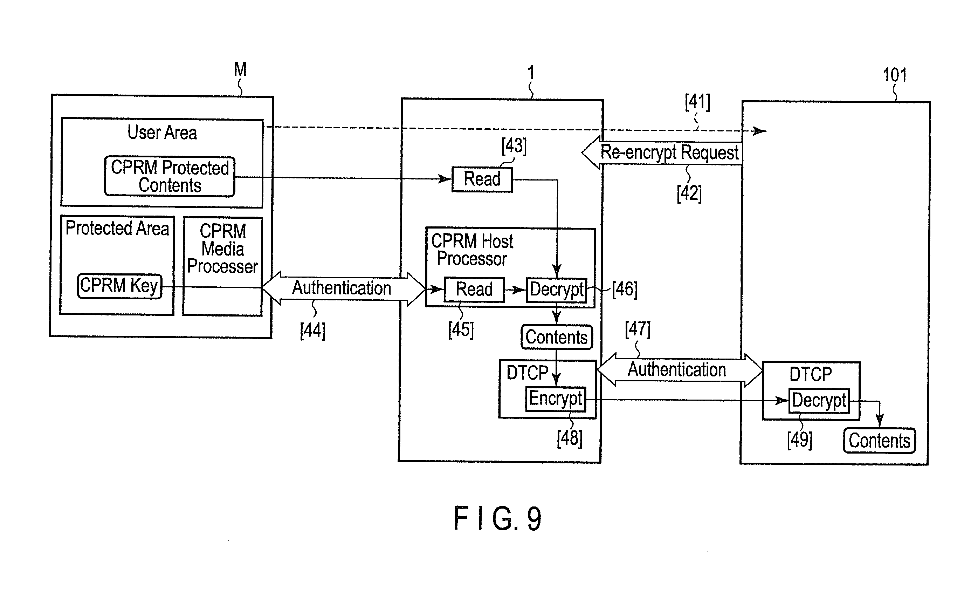

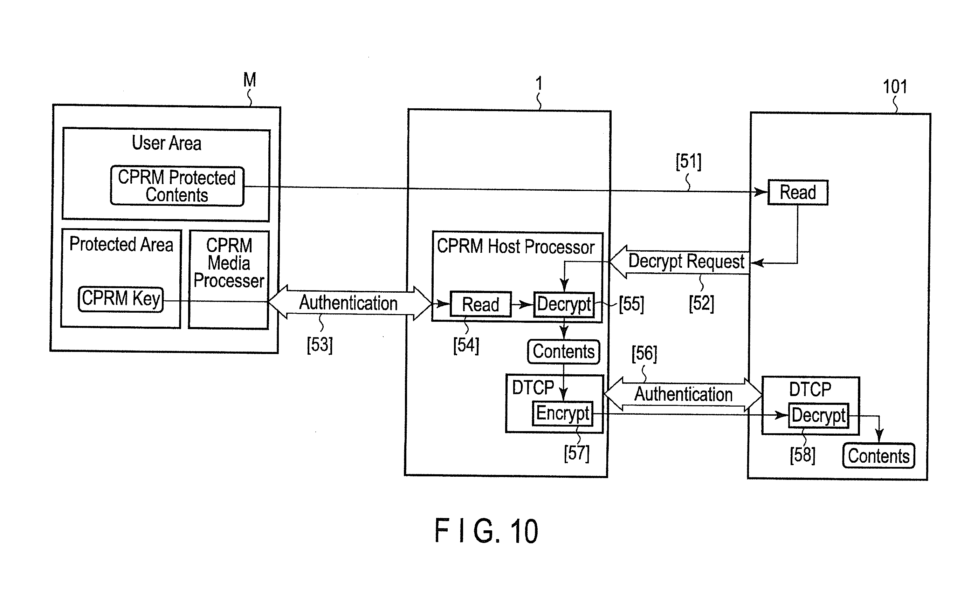

In the configuration shown in FIG. 7, in reproducing contents, the dongle 1 performs CPRM authentication directly with the SD card (CPRM (first DRM)-compatible medium) M in accordance with a contents list read instruction and a re-encrypt request from the PC 101. Thus, the PC 101 acquires data (e.g., a key) for the area protected by the CPRM, and decrypts the CPRM-protected contents. The dongle 1 also performs DTCP authentication with the PC 101 to convert the decrypted contents to the DTCP (second DRM) reproducible by the PC 101, and the dongle 1 supplies the contents re-encrypted by the DTCP to the PC 101. The contents (file) held in the SD card M can be read by the following methods. One method uses the file system of the dongle 1 to read the contents from the SD card M in accordance with the re-encrypt request from the PC 101 as shown in FIG. 9. The other method uses the file system of the PC 101 to read the contents from the SD card M by way of the PC 101 as shown in FIG. 10.

In the method shown in FIG. 9, the PC 101 only executes a read instruction for the dongle 1 to read the CPRM-protected contents held in the SD card M.

On the other hand, the method shown in FIG. 10 uses the file system of the PC 101 to read the CPRM-protected contents held in the SD card M. Therefore, the dongle 1 does not need to be equipped with a file system.

According to the reproduction method shown in FIG. 9 or FIG. 10, the CPRM-protected contents can be reproduced (read) and written (recorded/stored) even when the PC 101 has no SD card slot.

More specifically, according to the method shown in FIG. 9, the PC 101 instructs the dongle 1 to read a list of contents held in the SD card M [41], and makes a re-encrypt request (by the second DRM) to the dongle 1 to enable the contents to be reproduced by the PC 101 [42].

The dongle 1 reads the contents protected by the CPRM (first DRM) and an associated file from the SD card M [43].

The dongle 1 performs CPRM authentication directly with the SD card M [44], accesses the protected area in the SD card M, and acquires key information and others [45].

Subsequently, the dongle 1 uses the acquired key information to decrypt the CPRM-protected contents acquired from the SD card M [46].

The dongle 1 then performs DTCP (second DRM) authentication with the PC 101 [47], re-encrypts, by the DTCP, the contents decrypted regarding the first DRM, and sends the re-encrypted contents to the PC 101 [48].

Subsequently, the PC 101 decrypts and reproduces the DTCP contents sent from the dongle 1 [49].

More specifically, according to the method shown in FIG. 10, the PC 101 reads contents protected by the CPRM (first DRM) and an associated file from the SD card M [51], passes the CPRM contents and the associated file to the dongle 1, and requests re-encryption (by the second DRM) that enables the contents to be reproduced by the PC 101 [52].

The dongle 1 (which has received the re-encrypt request) performs CPRM authentication directly with the SD card [53], accesses the protected area in the SD card M, and acquires key information and others [54]. The dongle 1 uses the acquired key information and others to decrypt the CPRM-protected contents (first DRM) [55].

The dongle 1 then performs DTCP (second DRM) authentication with the PC 101 [56], re-encrypts, by the DTCP, the contents decrypted regarding the first DRM, and sends the re-encrypted contents to the PC 101 [57]. Subsequently, the PC 101 decrypts and reproduces the DTCP contents sent from the dongle 1 [58].

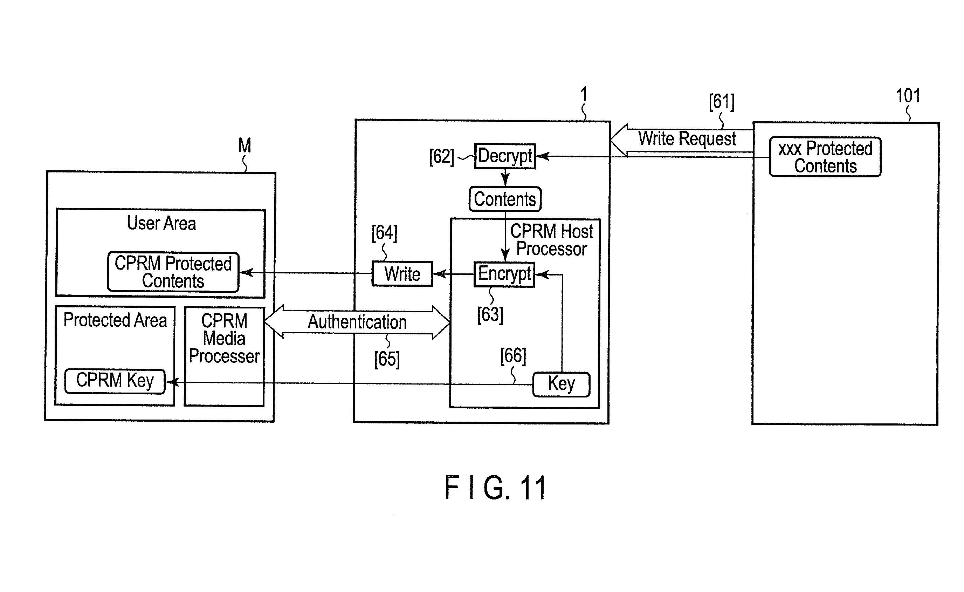

In the configuration shown in FIG. 7, to record/store contents, as shown in FIG. 11, the file name of contents to be recorded/stored in the SD card M is indicated to the dongle 1 from the PC 101, and a re-encrypt request is made to enable the contents to be recorded/stored in the SD card M by the first DRM (CPRM). The contents to be recorded are, for example, contents which are held in the PC 101 and which are to be DTCP (second DRM)-protected (by the PC 101) when sent to the dongle 1, contents which are downloaded by the PC 101 and which are protected by a third DRM, or contents directly received by the dongle 1 [61].

The dongle 1 decrypts the acquired contents [62], and re-encrypts the contents by the CPRM (first DRM) to record the contents in the SD card M [63].

The dongle 1 writes, into the SD card M, the contents which have been CPRM (first DRM)-protected by the re-encryption (and the associated file) [64].

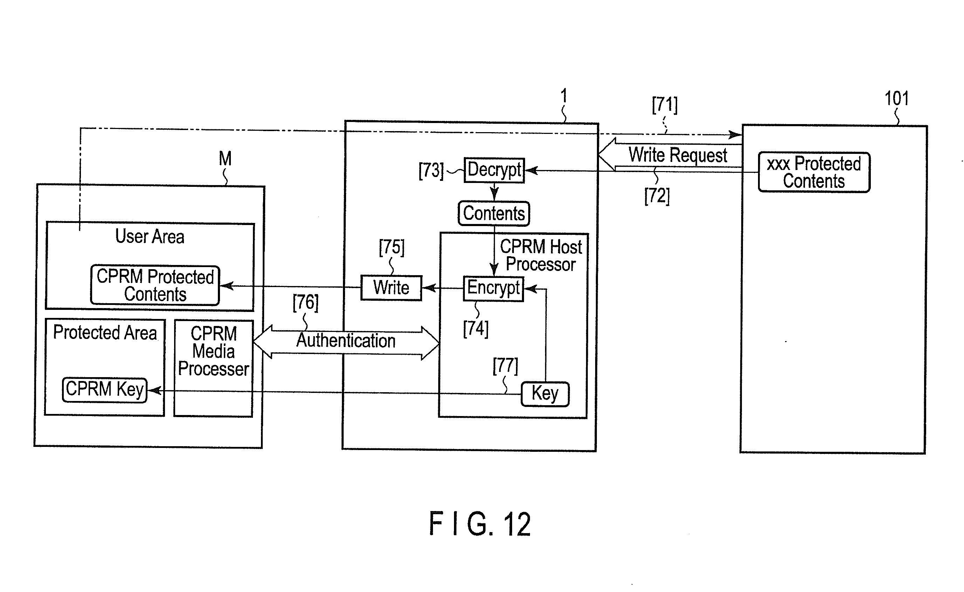

The dongle 1 also performs CPRM authentication with the SD card M [65], and writes the key information and others into the SD card M [66]. As shown in FIG. 12, the PC 101 requests the dongle 1 for a list of CPRM (first DRM)-protected contents that can be recorded/stored in the SD card M [71]. The PC 101 indicates the file name of the contents held in the dongle 1 which are to be recorded/stored in the SD card M, and makes a re-encrypt request to enable contents to be recorded/stored in the SD card M by the first DRM (CPRM) [72].

The dongle 1 decrypts the acquired contents [73], re-encrypts the contents by the CPRM (first DRM) to record the contents in the SD card M [74], records/stores the contents into the SD card M [75], performs CPRM authentication directly with the SD card M [76], and writes the key information and others into the CPRM (first DRM)-protected area in the SD card M [77].

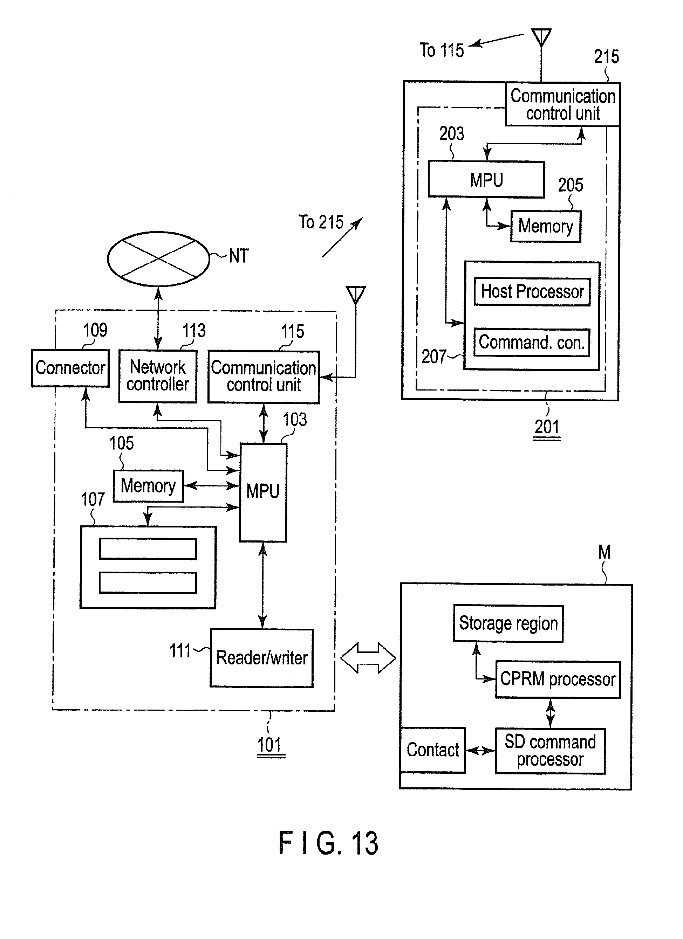

FIG. 13 shows another example of the connection of an electronic device and a storage device connected to the electronic device. The electronic device is capable of transferring data (contents) to/from a device (hardware key device) which supports a contents protection format in a non-contact manner, for example, by wireless communication or by short-range radio communication such as Bluetooth (registered trademark) or TransferJet (registered trademark). As the device (portable terminal device) which supports the contents protection format, for example, a PDA, a smartphone, or a tablet PC is available. In the embodiment, parts of the configuration and operation similar to the configuration and operation described with reference to FIG. 1 to FIG. 6 are not described.

In FIG. 13, a portable terminal device (device which supports the contents protection format) 201 comprises, for example, a short-range wireless communication unit 215 compliant with a scheme called WiFi or Bluetooth. The portable terminal device 201 is capable of non-contact transfer of data (contents) and commands to/from a PC 101 via the communication control unit 215. The PC 101 is capable of communication compliant with the above-mentioned scheme. The portable terminal device 201 also comprises an MPU 203, a memory unit 205, and a DRM processing unit 207.

In the portable terminal device 201, the DRM processing unit 207 supports a first DRM and a second DRM.

The PC 101 comprises at least an MPU 103, a memory unit 105, a DRM processing unit 107, and a reader/writer 111. The DRM processing unit 107 does not support the first DRM, but supports the second DRM.

The PC 101 is connected to a network NT which is, for example, an Internet network via a network controller 113, and acquires contents from a contents provider (connection partner).

In the configuration shown in FIG. 13, in reproducing contents, the portable terminal device 201 performs CPRM authentication directly with the SD card (CPRM (first DRM)-compatible medium) M in accordance with a contents list read instruction and a re-encrypt request from the PC 101. Thus, the PC 101 acquires data (e.g., a key) for the area protected by the CPRM, and decrypts the CPRM contents. The portable terminal device 201 also converts the contents held in the SD card M to the DTCP (second DRM) reproducible by the PC 101, and supplies the converted contents to the PC 101. The contents (file) held in the SD card M can be read by the following methods. One method uses the file system of the portable terminal device 201 to read the contents from the SD card M in accordance with the re-encrypt request from the PC 101. The other method uses the file system of the PC 101 to read the contents from the SD card M, for example, by wireless communication with the PC 101.

In the configuration shown in FIG. 13, the operation, that is, the method of transferring of data (contents) and recording/storing and reproducing contents substantially conforms to the method or operation described with reference to FIG. 1 to FIG. 6 in which the dongle is replaced by the portable terminal device, and is therefore not described in detail.

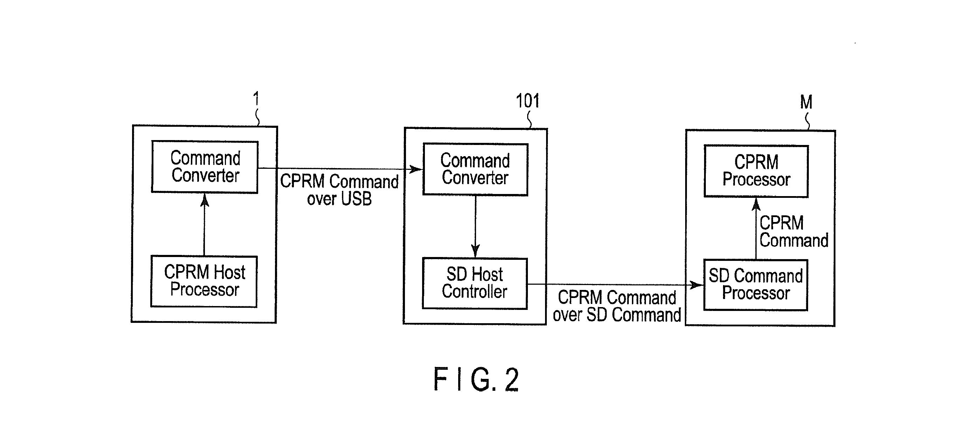

FIG. 2 shows an example of a control command used between the device shown in FIG. 1, the dongle, and the SD card.

In the dongle 1, a CPRM host processor and a command converter of the DRM processing unit 7 convert the CPRM (first DRM) command to a command that can be sent on an interface (here, a USB) with the PC 101 which is a partner device. The CPRM command supplied from the CPRM host processor to the command converter is a CPRM command for CPRM authentication, and is converted by the command converter to include a USB command that takes into consideration the transfer to the PC 101 (by way of a USB connector). That is, a CPRM command is converted to the format of a "CPRM command over USB".

The command converter of the PC 101 which has received the "CPRM command over USB" converts the command to a format to be passed to an SD host controller. That is, the command converter converts the command to the format of a "CPRM command over SD command".

The PC 101 passes the "CPRM command over SD command" to the SD card M via the SD host controller. This enables the CPRM authentication between the dongle 1 and the SD card M through the PC 101, that is, the sending/receiving of the CPRM command.

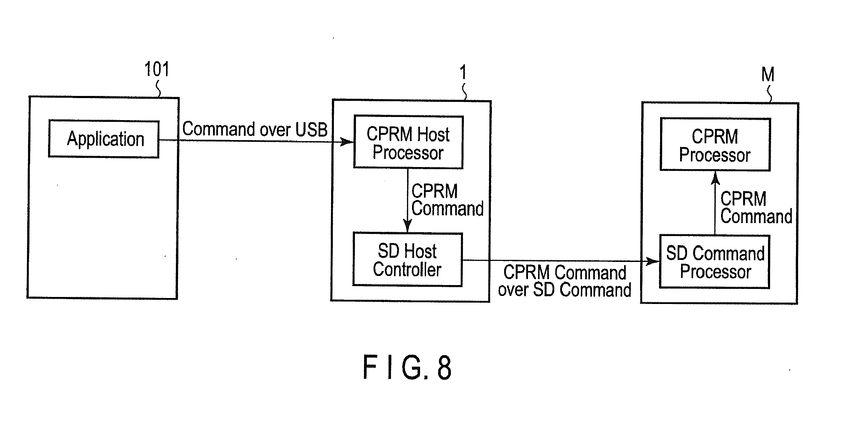

FIG. 8 shows an example of a control command used between the electronic device, the dongle, and the SD card shown in FIG. 7.

When a contents reproduction application in the PC 101 cannot handle the CPRM-protected contents held in the SD card M, the application instructs the dongle 1 connected to the SD card M to control the recording/reproduction of the CPRM-protected contents.

Through an application used for control (control of recording/reproduction of the CPRM-protected contents) instruction to the dongle 1 by way of the connector 109, the PC 101 instructs the dongle 1 to reproduce (read) the contents held in the SD card M, or record/reproduce the contents to be recorded in the SD card M.

In accordance with the control instruction (command over USB) from the PC 101, the dongle 1 inputs the CPRM command (first DRM) to the SD host controller.

The SD host controller of the dongle 1 and the SD card M perform authentication processing by the command "CPRM command over SD command".

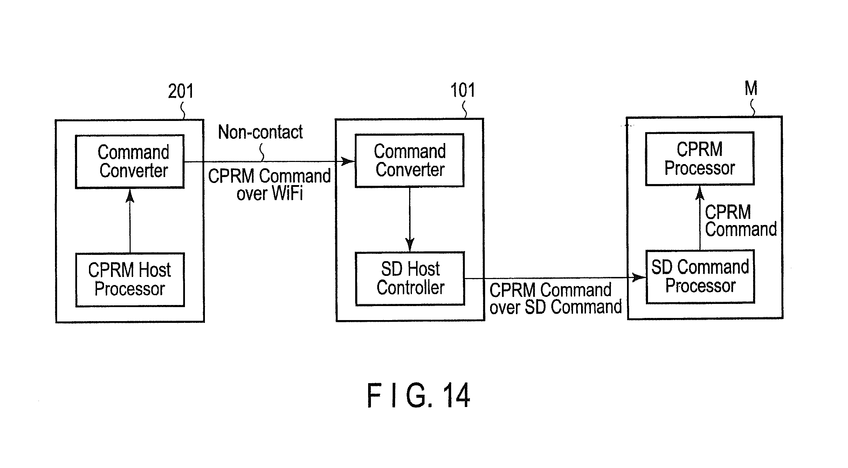

FIG. 14 shows an example of a control command between the electronic device, the portable terminal device, and the SD card shown in FIG. 13.

In the portable terminal device 201, the CPRM host processor sends a CPRM command to the command converter, and the command converter converts the CPRM command to a command "CPRM command over WiFi" that takes into consideration the transfer to the PC 101 by non-contact (wireless or infrared) communication. For example, the command "CPRM command over SD command" is used for the transfer of contents between the PC 101 (SD host controller) and the SD card M (SD command processor).

## Claims

1. An electronic device which supports a first contents protection scheme and a second contents protection scheme, the electronic device communicating with an external device which does not support the first contents protection scheme and supports the second contents protection scheme, the electronic device **characterized by** comprising:
an acquiring module (3, 7) configured to acquire, via the external device, contents which are held in a contents holding medium and which are protected by the first contents protection scheme; and
an output module (3, 7) configured to convert the acquired contents protected by the first contents protection scheme to the second contents protection scheme and then outputs the contents to the external device by the second contents protection scheme.

2. The electronic device of claim 1, **characterized by** further comprising:
a receiving module (3, 7) configured to receive a request from the external device
**characterized in that**
the acquiring module acquires the contents in response to the request.

3. The electronic device of claim 1,
**characterized in that**
the acquiring module acquires contents protected by the second contents protection scheme from the external device, and the output module converts the acquired contents protected by the second contents protection scheme to the first contents protection scheme and then outputs the contents to the contents holding medium via the external device by the first contents protection scheme.

4. The electronic device of claim 1,
**characterized in that**
the output module is connected to the external device.

5. The electronic device of claim 4,
**characterized in that**
the output module outputs contents to the external device in a non-contact manner.

6. The electronic device any one of claims 1 to 5,
**characterized in that**
the first contents protection scheme includes content protection for recordable media (CPRM).

7. The electronic device of claim 4,
**characterized in that**
the output module is connected to the external device by a universal serial bus (USB).

8. An electronic device which supports a first contents protection scheme and a second contents protection scheme different from the first contents protection scheme, the electronic device **characterized by** comprising:
a connecting module (9) configured to connect a portable contents holding medium is removably connected;
a acquiring module (3, 7) configured to acquire contents which are stored in a protected area of a storage region of the contents holding medium and which are protected by the first contents protection scheme;
a converting module (7) configured to convert the protection scheme of the acquired contents protected by the first contents protection scheme to the second contents protection scheme; and
an output module (3, 7) configured to output the converted contents protected by the second contents protection scheme to an external device which does not support the first contents protection scheme,
**characterized in that**
the contents protected by the first contents protection scheme are decryptable in other devices which support the first contents protection scheme, and
the contents protected by the second contents protection scheme are decryptable in other devices which support the second contents protection scheme.

9. The electronic device of claim 8,
**characterized by** further comprising:
a writing module (11/111) configured to write contents into the contents holding medium; and
a receiving module (11/111) configured to receive the contents protected by the second contents protection scheme from the external device,
**characterized in that**
the converting module converts the protection scheme of the received contents compliant with the second contents protection scheme to the first contents protection scheme, and
the writing module writes the contents converted to the first contents protection scheme by the converting module into the protected area of the storage region of the contents holding medium.
